# EUROPEAN PATENT APPLICATION

(11) **EP 2 579 524 A1**
(43) Date of publication of application: **10.04.2013**
(21) Application number: 10852415.8
(22) Date of filing: 20.10.2010
(51) Int. Cl.: H04L 12/66

(54) **METHOD AND SYSTEM FOR IDENTIFYING ACCESSING NETWORK FOR HOME GATEWAY**

(30) Priority: 02.06.2010 CN 201010196426
(71) Applicant: ZTE Corporation, Shenzhen, Guangdong 518057 (CN)
(72) Inventor: HE, Feng, Shenzhen, Guangdong 518057 (CN)
(74) Representative: Delorme, Nicolas
(86) International application number: PCT/CN2010/077908
(87) International publication number: WO 2011/150620

(57) **Abstract**

The present invention provides a method and a system for identifying and accessing network for a Home Gateway (HG). The method comprises: an Optical Network Unit (ONU) receives an HG Media Access Control (MAC) feature code and a management Virtual Local Area Network (VLAN) sent by a network manager; the ONU automatically identifies the HG which is connected to the ONU and corresponds to the HG MAC feature code and the management VLAN, and reports the MAC address and the service attribute of the HG to the network manager; after making the HG network access message be confirmed by a resource system, the network manager configures the HG network access identifier of the ONU as having accessed network, and sends service VLAN conversion rules to the ONU; according to the service VLAN conversion rules, the ONU converts the service VLAN on the HG to the service VLAN can be identified by the ONU, so as to implement identifying and accessing network for the HG. The automatic identifying and accessing network for the HG can be realized by the present invention.

## Description

### Field of the Invention

The invention relates to the field of communications, and in particular to a method and a system for identifying and accessing network for a Home Gateway (HG).

### Background of the Invention

The Gigabit-capable Passive Optical Network (GPON) is a broadband access technology which adopts the point-to-multipoint network structure and the passive optical fibre transmission mode, is on the basis of GPON Encapsulation Method (GEM) frame encapsulation, and provides various integrated services.

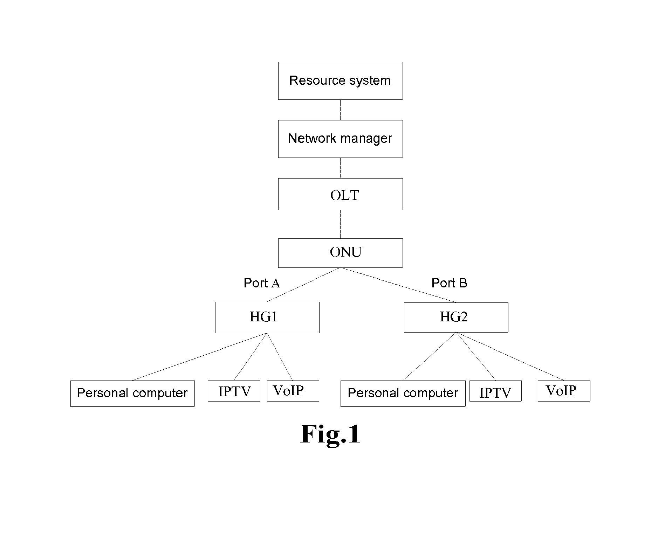

Fig. 1 shows a diagram of the GPON service networking according to the conventional art. As shown in Fig. 1, the GPON comprises the local side equipment Optical Line Terminal (OLT), the client equipment Optical Network Unit (ONU) and a connecting line Optical Distribute Network (ODN). A resource system and a network manager are connected on the GPON, and the HG is connected to the GPON for providing the services such as network access, Internet Protocol Television (IPTV), Voice over Internet Protocol (VoIP) and the like for users.

The conventional art provides a Passive Optical Network (PON) system, which can automatically identify the terminal equipment which is connected to the ONU by pre-planning the Media Access Control (MAC) address range of the HG among the terminal equipment. In the GPON system, the OLT manages and controls the ONU mainly via the ONU Management and Control Interface (OMCI), and the international standard International Telecommunications Union-Telecommunications standardization sector (ITU-T) G984.4 of the OMCI realizes various services mainly by defining a series of Management Entities (ME) and the relationship thereof. At present, no related ME in the G984.4 standard has been defined to realize the functions of automatic identifying and accessing network for the HG.

However, during the realization process of the present invention, the inventor discovers that: in the GPON system, the conventional art cannot realize the automatic identifying and accessing network for the HG which is connected to the ONU.

### Summary of the Invention

The main purpose of the present invention is to provide a method and a system for identifying and accessing network for the HG, so as to realize the automatic identifying and accessing network for the HG which is connected to the ONU.

According to one aspect, the present invention provides a method for identifying and accessing network for the HG. The method comprising: an Optical Network Unit (ONU) receiving an HG Media Access Control (MAC) feature code and a management Virtual Local Area Network (VLAN) sent by a network manager; the ONU automatically identifying an HG which is connected to the ONU and corresponds to the HG MAC feature code and the management VLAN, and reporting an MAC address and a service attribute of the HG to the network manager; after making an HG network access message be confirmed by a resource system, the network manager configuring an HG network access identifier on the ONU as having accessed network, and sending a service VLAN conversion rule to the ONU; and the ONU converting a service VLAN on the HG to a service VLAN which can be identified by the ONU according to the service VLAN conversion rule, so as to implement identification and network access for the HG.

The step of the ONU receiving the HG MAC feature code and the management VLAN sent by the network manager comprises: the ONU receiving the HG MAC feature code and the management VLAN sent by the network manager via an HG configuration data entity, wherein the HG configuration data entity is configured to configure the management VLAN and the HG MAC feature code, and the HG configuration data entity comprises the following attributes: a Managed entity Identifier (Meid), a management VLAN, and a MAC code table, wherein the Meid represents that the entity has only one instance and the value of Meid is 0; the value of the management VLAN is 0, representing that the ONU does not detect the HG which is connected to the ONU; and the MAC code table is used for storing the MAC feature code.

The step of the network manager configuring the HG network access identifier on the ONU as having accessed network comprises: the network manager configuring the HG network access identifier on the ONU as having accessed network via an HG connection data entity, wherein, the HG connection data entity is configured to configure the network access identifier and report a network access event, and the HG connection data entity comprises the following attributes: an Meid, an MAC address, a connection identifier, a data VLAN (DATA VLAN), and a plurality of service VLANs, wherein the attribute value of the Meid is equal to the Meid of a corresponding Physical path termination point Ethernet User Network Interface (UNI) entity; the MAC address represents an MAC address information of the HG detected on a user port of the ONU; the connection identifier is an network access identifier bit, 0 represents not accessing network, and 1 represents having accessed network; the DATA VLAN represents a data service VLAN configured on the user port of the ONU; and the plurality of service VLANs represent the VLANs on the user port of the ONU, for special services; the step of the network manager configuring the HG network access identifier on the ONU via the HG connection data entity comprises: configuring the connection identifier attribute value of the HG connection data entity in the ONU to be 1.

The step of the ONU automatically identifying the HG which is connected to ONU and corresponds to the HG MAC feature code and the management VLAN comprises: identifying a message which is reported by the HG, and obtaining port information and an MAC Address; searching the HG connection data entity according to the port information, and updating the corresponding MAC address in the HG connection DATA entity; obtaining an attribute value of the service VLAN according to a value of the DATA VLAN of the HG connection data entity; encapsulating the MAC address and the attribute value of the service VLAN to be an Attribute Value Change (AVC) message, and then reporting the AVC message to the network manager.

The step of identifying the message which is reported by the HG comprises: judging whether a reporting port is in an authentication state of not accessing network; reporting whether the VLAN of the message is the management VLAN; and judging whether an MAC address pool of the ONU is empty.

Before the ONU automatically identifying the HG which is connected to the ONU and corresponds to the HG MAC feature code and the management VLAN, the method further comprises a network access operation of the ONU. The network access operation of the ONU comprises : after receiving a power-on message from an unknown ONU, the network manager configuring a Transmission Container (TCONT) entity and a Gigabit-capable Passive Optical Network (GPON) Encapsulation Method Port (GEM Port) entity for the ONU; adding a temporary network accessing VLAN on the GEM Port, and adding the user port of the ONU to the temporary network accessing VLAN; the network manager reporting ONU network access information to the resource system, and configuring a user data port of the ONU to add the network accessing VLAN in an untag (UNTAG) mode via an Extended VLAN tagging operation configuration data entity, and deleting the temporary network accessing VLAN on the data port after receiving a response from the resource system; the ONU writing the network accessing VLAN into the DATA VLAN attribute of an HG connection data entity database, the network manager sending the HG MAC address pool and the network management VLAN configuration of the ONU via the HG configure data entity, and adding all the data ports of the ONU into the management VLAN in the mode of tag (TAG); and the ONU writing the attribute value of the HG configure data entity into a Management Entity (ME) database, storing the HG MAC address pool and the network management VLAN of the ONU, so as to realize the network access of the ONU.

After identifying and accessing network for the HG, the method further comprises an HG deletion operation. The HG deletion operation comprises: after receiving an HG deletion operation message, the network manager deleting the VLAN configuration under the HG scene via the Extended VLAN tagging operation configuration data entity; configuring a corresponding data port of the ONU to add the network accessing VLAN in UNTAG mode; and the network manager configuring the HG network access identifier on the ONU to be non-accessed via the HG connection data entity.

The service comprises an interactive Internet Protocol Television (IPTV) and/ or a Voice over Internet Protocol (VoIP) based on a data network.

According to another aspect, the present invention provides a system for identifying and accessing network for the HG. The system comprises an Optical Network Unit (ONU) and a network manager, wherein the ONU is configured to receive an HG Media Access Control (MAC) feature code and a management Virtual Local Area Network (VLAN) sent by the network manager, automatically identify an HG which is connected to the ONU and corresponds to the HG MAC feature code and the management VLAN, and report an MAC address and a service attribute of the HG to the network manager; the network manager is configured to send an HG network access message to a resource system for identifying, configure an HG network access identifier on the ONU as having accessed network, and send a service VLAN conversion rule to the ONU; the ONU is further configured to convert a service VLAN on the HG to a service VLAN which can be identified by the ONU according to the service VLAN conversion rule, so as to implement identification and network access for the HG.

The system further comprises an HG configure data entity configured to configure the management VLAN and the MAC feature code. The HG configure data entity comprises the following attributes: a Managed entity Identifier (Meid), a management VLAN, and an MAC code table, wherein the Meid represents that the entity has only one instance and the value of Meid is 0; the value of the management VLAN is 0, representing that the ONU does not detect the HG which is connected to the ONU; and the MAC code table is used for storing the MAC feature code; the ONU is configured to receive the HG MAC feature code and the management VLAN sent by the network manager via the HG configure data entity.

The system further comprises an HG connection data entity configured to configure the network access identifier and report a network access event. the HG connection data entity comprises the following attributes: a Meid, an MAC address, a connection identifier, a data VLAN (DATA VLAN), and a plurality of service VLANs, wherein the attribute value of the Meid is equal to the Meid of a corresponding Physical path termination point Ethernet User Network Interface (UNI) entity; the MAC address represents an MAC address information of the HG detected on a user port of the ONU; the connection identifier is an network access identifier bit, 0 represents not accessing network, and 1 represents having accessed network; the DATA VLAN represents a data service VLAN configured on the user port of the ONU; and the plurality of service VLANs represent the VLANs on the user port of the ONU, for special services; the network manager is configured to configure the HG network access identifier on the ONU as having accessed network via the HG connection data entity.

In the present invention, the HG connected to the ONU is configured and identified according to the MAC feature code and the management VLAN, so as to realize the automatic identifying and accessing network for the HG connected to the ONU.

### Brief Description of the Drawings

Drawings, provided for further understanding of the present invention and forming a part of the specification, are used to explain the present invention together with embodiments of the present invention rather than to limit the present invention, wherein:
Fig. 1 shows a schematic of the GPON service networking according to conventional art;
Fig. 2 shows a schematic of an ONU functional structure in a method for identifying and accessing network for the HG according to the embodiment I of the present invention;
Fig. 3 shows a flowchart for configuring and identifying the HG connected to the ONU in the method for identifying and accessing network for the HG according to the embodiment I of the present invention;
Fig. 4 shows a flowchart for the network manager to set the HG on the ONU via entity HG connection data in the method for identifying and accessing network for the HG according to the embodiment I of the present invention;
Fig. 5 shows a flowchart for processing ONU in the method for identifying and accessing network for the HG according to the embodiment II of the present invention;
Fig. 6 shows a flowchart of ONU for setting the HG deletion in the method for identifying and accessing network for the HG according to an embodiment III of the present invention.

### Detailed Description of the Invention

The preferred embodiments are described in conjunction with the drawings as follows. It shall be understood that the preferred embodiments described herein are only used to describe and explain the present invention and shall not be construed as improper limitations on the same. The embodiments of the present application and the features of the embodiments can be combined with each other if there is no conflict.

### Method embodiment I:

The embodiment extends the ME in the G984.4 standard, and defines two MEs.

The first ME interface is the HG configure (config) data entity (HG network access detection information configuration), the Meclass (ME Class) value is defined to be 251, for configuring the management VLAN and the MAC feature code; the ME is createed by the ONU, wherein, the following three attributes are defined:
Managed entity Identifier (Meid): this entity has only one instance, and the value is 0;
The management VLAN: taking the value as 0, representing that ONU does not detect the HG connected to the ONU;
MAC code table: for storing the MAC feature codes; and the MAC code table is a tale attribute, the maximum storage item number is 32, each item is 7 bytes, including action of 1 byte (0: representing deleting this item; 1: representing adding to the item; 2: representing emptying all the entries), and MAC addresses of 6 bytes; when the ONU is detecting, once 0xFF appears, and the followings are all 0xFFs, it considers that all the 0xFFs from the first one are wildcard characters;
the second ME interface is the HG connection data entity (HG network access identifier), the Meclass value is defined to be 252, mainly for configuring the network access identifier and reporting the network access events; there is a one to one correspondence between the entity and the ME Physical path termination point Ethernet UNI, and the ONU creates one instance of the HG connection data entity when - one instance of the Physical path termination point Ethernet UNI entity is created by the ONU; and each user port on each UNI side creates one instance of the HG connection data entity. The following 6 attributes are defined:
   Meid: the Meid of this entity is equal to the Meid of the Physical path termination point Ethernet UNI entity;
   MAC address: for representing the MAC address information of the HG which is detected on the user port of the ONU;
   Connection identifier (ind): network access identifier bit,0 represents not accessing network, 1 represents having accessed network;
   DATA VLAN: for representing the data service VLAN configured on the user port of the ONU;
   IPTV VLAN: for representing the VLAN of the user port of the ONU for IPTV services;
   VoIP VLAN: for representing the VLAN of the user port of the ONU for VoIP services.

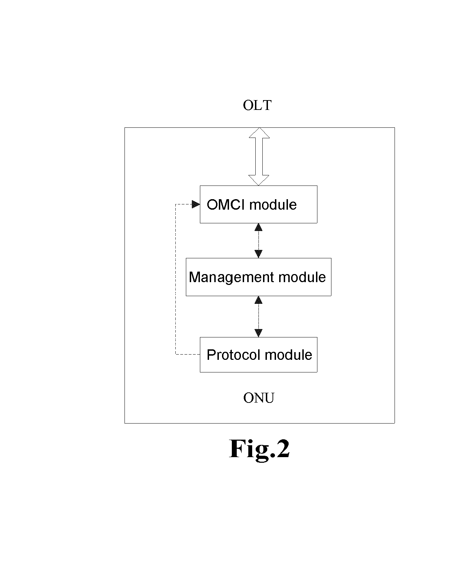

In order to make the description be convenient, the ONU is divided into multiple software modules according to their respective functions, comprising an OMCI module, a management module and a protocol module. Fig. 2 shows a schematic of the ONU functional structure in the method for identifying and accessing network for the HG according to the embodiment I of the present invention. As shown in Fig. 2, the OMCI module can be further divided into an OMCI information analysis and encapsulation sub-module, an ME database sub-module, an OMCI processing sub-module and an OMCI execution sub-module. The message interaction with the OLT is performed by the OMCI module. The management module is mainly responsible for configuring the configuration parameter which is sent by the OMCI module to the protocol module, and storing the parameter. The protocol module is responsible for identifying the message reported from the user port, and sending the related information to the OMCI module through a message.

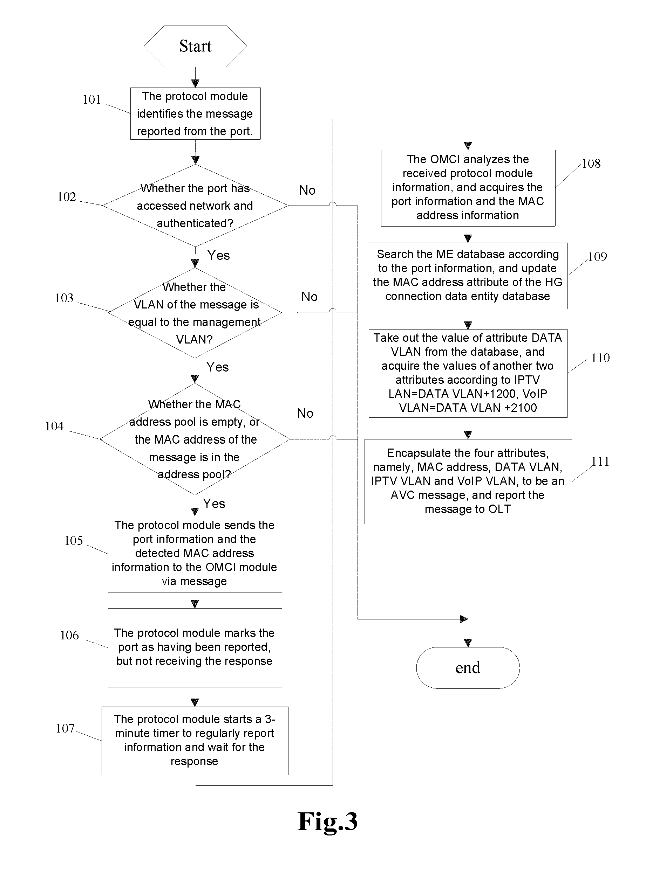

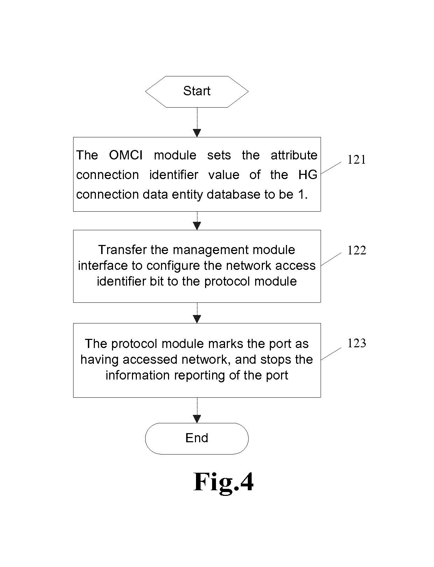

The embodiment provides a method for identifying and accessing network for the HG. It should be noted that all the configurations in the embodiment are sent to the ONU via the network manager, and the OLT only provides a channel for the configurations. The method for identifying and accessing network for the HG provided by the embodiment comprises the steps of:
Step a: after accessing network (namely, the HG MAC feature code and the management VLAN have been configured), the ONU starts to configure and identify the HG which is connected to the ONU according to the HG MAC feature code and the management VLAN. Fig. 3 shows a flowchart for configuring and identifying the HG which is connected to the ONU in the method for identifying and accessing network for the HG according to the embodiment I of the present invention. As shown in Fig. 3, the flow comprises the steps of:
   Step 101: the protocol identifies the message reported from the port of the ONU;
   Step 102: judge whether the port is in the authentication state of not accessing network, if yes, moving no to Step 103, if not, the protocol module does not process;
   Step 103: judge whether the VLAN of the message is equal to the management VLAN, if yes, moving on to Step 104, if not, the protocol module does not process;
   Step 104: judge whether the MAC address pool of the ONU is empty, if yes, moving no to Step 105, and the protocol module only identifies the management VLAN; if not, the protocol module does not process; judge whether the MAC address of the message is in the MAC address pool, if yes, moving no to Step 405, if not, the protocol module does not process;
   Step 105: the protocol module sends the port information and the detected MAC address information to the OMCI module via a message;
   Step 106: the protocol module marks the port to be the state of having reported but not receiving the response;
   Step 107: the protocol module starts a three-minute timer to regularly report the information and wait for the response;
   Step 108: the OMCI analyzes the received messages from the protocol module, and acquires the port information and the MAC address information;
   Step 109: search ME database according to the port information, and update the MAC address attribute of the HG connection data entity database;
   Step 110: take out the value of the attribute DATA VLAN from the database, and respectively acquire the values of the attribute IPTV VLAN and the attribute VoIP VLAN according to the computation rules: IPTV VLAN=DATAvlan+1200, VoIP VLAN= DATA vlan+2400;
   Step 111: encapsulate the four attribute values, namely, MAC address, DATA VLAN, IPTV VLAN and VoIP VLAN to be an AVC message, and report to the network manager;
Step b: the network manager sends the HG network access message to the resource system, and after the resource system successfully responds, the network manager sets the HG network access identifier on the ONU as having accessed network via the entity HG connection data, and configures three VLAN conversion rules via the entity Extended VLAN tagging operation configuration data, converts the network accessing VLAN, IPTV service VLAN and point-to-point service VLAN on the HG to the corresponding service VLAN values (network accessing VLAN, IPTV VLAN, VoIP VLAN) of the ONU device, wherein the management VLAN is not converted. Fig. 4 shows a flow chart for a network manager to set the HG on the ONU via entity HG connection data in the method for identifying and accessing network for the HG according to the embodiment II of the present invention. As shown in Fig. 4, the flow comprises the steps of:
   Step 121: the OMCI module sets the attribute Connection ind of the HG connection data entity database to be 1;
   Step 122: transfer the management module interface to configure the network access bit to the protocol module;
   Step 123: the protocol module marks the port as having accessed network, and stops the information reporting of the port.

In the embodiment, the HG connected to the ONU is configured and is identified according to the HG MAC feature code and the management VLAN via the two defined MEs, and the network access identifier is configured and the network access information is reported through the HG connection data entity, so as to realize the automatic identifying and accessing network for the HG.

### Method embodiment II:

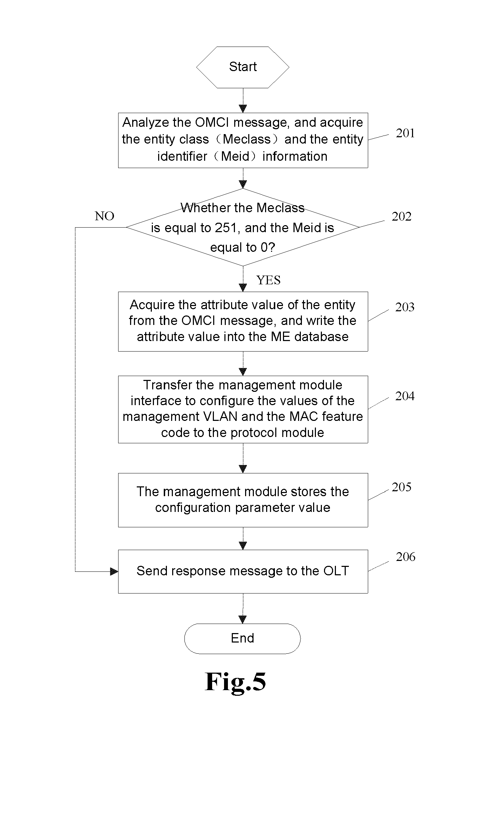

Before the HG described in embodiment I accesses network, it further comprises a network accessing operation of the ONU, including the steps of:
Step a: after receiving a power-on message from an unknown ONU , the network manager configures a TCONT entity and a GEM Port entity for the ONU; a temporary network accessing VLAN is added on the GEM Port, and the user port of the ONU is added to the temporary network accessing VLAN;
Step b: the network manager reports the network access message of the ONU to the resource system;
Step c: the network manager configures the ONU after receiving the response from the resource system, configures the user data port of the ONU via the Extended VLAN tagging operation configuration data entity to add the network accessing VLAN in UNTAG mode, and deletes the temporary network accessing VLAN on the data port; the OMCI module writes the network accessing VLAN into the DATA VLAN attribute of the HG connection data entity database; the step of adding the network accessing VLAN in UNTAG mode refers that the uplink message which enters the data port and has no VLAN identifier is added with the configured network accessing VLAN, and the VLAN mark of the down-link message which is out from the data port and has the network accessing VLAN identifier is stripped;
Step d: the network manager sends the HG MAC address pool and the network management VLAN configuration of the ONU, all the data ports of the ONU are added into the management VLAN in TAG mode. Fig. 5 shows a flowchart for processing ONU in the method for identifying and accessing network for the HG according to the embodiment II of the present invention. As shown in Fig. 5, the flow comprises the steps of:
   Step 201: analyze the OMCI message;
   Step 202: judge whether the sent configuration entity is the HG configure data;
   Step 203: write the attribute value of the HG configure data entity into the ME database;
   Step 204: the management module configures the configuration parameter into the protocol module;
   Step 205: the management module stores the configuration parameter, in order to reconfigure the management VLAN and the MAC feature code information to the protocol module after the ONU powers down and restarts, the OMCI module also acquires the information from the protocol module and stores the information into the own ME database;
   Step 206: send the response message to the OLT.

Before the HG described in the embodiment I accesses network, the method of the embodiment implements the network access operation of ONU, and the method has all advantages of the embodiment I and higher feasibility.

### Method embodiment III:

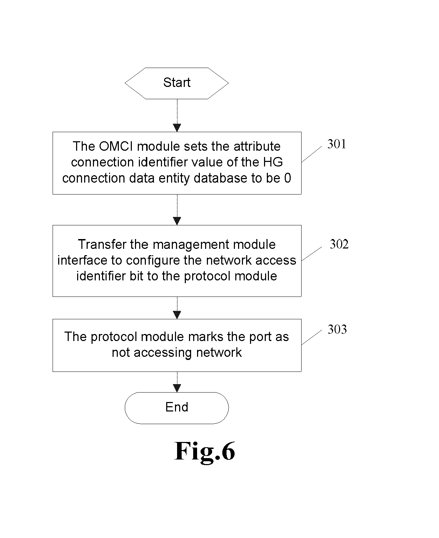

After the HG described in the embodiment I accesses network, it also comprises the HG deletion operation, including the steps of:
Step a: after receiving the HG deletion operation message from the resource system, the network manager deletes the VLAN configuration under the HG scene via the Extended VLAN tagging operation configuration data entity; and configures the corresponding the data port of the ONU to add the network accessing VLAN in UNTAG mode;
Step b: the network manager configures the HG network access identifier on the ONU to be non-accessed via the HG connection data entity. Fig. 6 shows a flowchart for ONU setting for deleting the HG in the method for identifying and accessing network for the HG according to an embodiment III of the present invention. As shown in Fig. 6, the flow comprises:
   Step 301: the OMCI module sets the attribute Connection ind value of the HG connection data entity database to be 0;
   Step 302: transfer the management module interface to configure the network access identifier bit to the protocol module;
   Step 303: the protocol module marks the port to be non-accessed state.

After the HG described in the embodiment accesses network, the method of the embodiment has all the advantages of the embodiment I, and provides a solution for various services such as the data, IPTV and VoIP in the infrastructures of the HG.

### Method embodiment IV:

A specific embodiment is described below with reference to the Fig. 1 and the embodiments I to IV. As shown in Fig. 1, a temporary network accessing VLAN3998 is set, the network accessing VLAN of port A is 100, the network accessing VLAN of port B is 101, and the management VLAN is 3999. The MAC address entries of the MAC address pool are 00:00:00:00:01:01, 00:00:00:00:02:02. On the HG1, the network accessing VLAN is 3998, the IPTV service VLAN is 3991, and the VoIP service VLAN is 3992. On the HG2, the network accessing VLAN is 3997, the IPTV service VLAN is 3993, and the VoIP service VLAN is 3994.
Step a: the network manager configures a TCONT and a GEM Port for the ONU, adds VLAN3998 to the GEM Port, and adds all the data ports of the ONU to the VLAN3998 in the UNTAG mode;
Step b: the network manager deletes VLAN3998 of all the data ports; the port A of the ONU is added to the network accessing VLAN100 in the UNTAG mode, and the port B is added to the network accessing VLAN 101 in the UNTAG mode;
Step c: the network manager configures the management VLAN3999, and adds all the data ports of the ONU into the management VLAN3999 in the TAG mode, configures the MAC address pool to be 00:00:00:00:01:01, 00:00:00:00:02:02;
Step d: if the VLAN reported from the port A is 3999, and the source MAC address is 00:00:00:00:01:01, the ONU protocol module reports the message to the OMCI module after identifying the message, the OMCI reports the AVC message, of which the MAC Address is 00:00:00:00:01:01, and the DATA VLAN is 100, IPTV VLAN is 100+1200, VoIP VLAN is 100+2400. After the resource system successfully responds the network manager, the network manager sends three conversion rules of the port A, uplink: VLAN3998 is converted to VLAN100, VLAN3992 is converted to VLAN1300, VLAN3991 is converted to VLAN2500; the rules of the downlink are opposite; and the network access identifier bit of the port A is in the state of having accessed network, finally the process of identifying and accessing network for the port A is completed;
   if the VLAN reported from the port B is 3999, and the source MAC address is 00:00:00:00:02:02, the ONU protocol module reports the message to the OMCI module after identifying the message, the OMCI reports the AVC message, of which the MAC Address is 00:00:00:00:02:02, and the DATA VLAN is 101, IPTV VLAN is 101 +1200, VoIP VLAN is 101+2400; after the resource system successfully responds the network manager, the network manager sends three conversion rules of the port A, uplink: VLAN3997 is converted to VLAN101, VLAN3993 is converted to VLAN1301, VLAN3994 is converted to VLAN2501; the rules of the downlink are opposite; and the network access identifier bit of the port B is the state of having accessed network, finally the process of identifying and accessing network for the port A is completed;
Step e: after receiving the HG deletion operation message from the resource system, the network manager deletes the three conversion rules on the port A and port B of the ONU; the port A of ONU is added to the network accessing VLAN 100 in the UNTAG mode, and the port B is added to the network accessing VLAN101 in the UNTAG mode, the network manager sets the HG network access identifier on the ONU as not accessing network.

This embodiment is the specific applications of the embodiments I to III, and has all the advantages of the aforementioned embodiments. It's unnecessary to repeat.

### System embodiment I:

The embodiment discloses a system for identifying and accessing network for the HG, comprising the ONU and the network manager, wherein, the ONU is configured to receive the HG MAC feature code and the management VLAN sent by the network manager, automatically identify the HG which is connected to the ONU and corresponds to the HG MAC feature code and the management VLAN, and report the MAC address and the service attribute of the HG to the network manager; the network manager is configured to send the HG network access message to the resource system for identifying, configure the HG network access identifier on the ONU as having accessed network, and send service VLAN conversion rules to the ONU; the ONU is further configured to convert the service VLAN on the HG to the service VLAN which can be identified by the ONU according to the service VLAN conversion rules, so as to implement identifying and accessing network for the HG.

The system further comprises: the HG configure data entity, which is configured to configure the management VLAN and the MAC feature code, and the HG configure data entity comprises the following attributes: Meid: the entity has only one embodiment, and the value is 0; the management VLAN: 0 represents that the ONU does not detect the HG connected to the ONU; the MAC code table, configured to store the MAC feature code; the ONU is configured to receive the HG MAC feature code and the management VLAN sent by the network manager via the HG configure data entity.

The system further comprises: the HG connection data entity, which is configured to configure the network access identifier and report the accessing event, and the HG connection data entity comprises the following attributes: Meid, of which the attribute value is equal to the Meid of the corresponding Physical path termination point Ethernet UNI entity; the MAC address; representing the MAC address information of the HG which is detected on the user port of the ONU; the Connection ind: network access identifier bit, 0 represents not accessing network and1 represents having accessed network; DATA VLAN, representing the data service VLAN configured on the user port of the ONU; a plurality of service VLANs, representing the VLANs of the user port of the ONU for special services; the network manager is configured to configure the HG network access identifier on the ONU as having accessed network via the HG connection data entity. And the step of the network manager configures the HG network access identifier on the ONU as having accessed network specifically comprises: the network manager configures the HG network access identifier on the ONU as having accessed network via the HG connection data entity.

The implement of this embodiment refers to the related descriptions of the method embodiments I to III, and this embodiment has all the advantages of the aforementioned embodiments. It's unnecessary to repeat.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. are all included in the scope of the protection of the present invention.

## Claims

1. A method for identifying and accessing network for a Home Gateway (HG), **characterized by** comprising:
an Optical Network Unit (ONU) receiving an HG Media Access Control (MAC) feature code and a management Virtual Local Area Network (VLAN) sent by a network manager;
the ONU automatically identifying an HG which is connected to the ONU and corresponds to the HG MAC feature code and the management VLAN, and reporting an MAC address and a service attribute of the HG to the network manager;
after making an HG network access message be confirmed by a resource system, the network manager configuring an HG network access identifier on the ONU as having accessed network, and sending a service VLAN conversion rule to the ONU; and
the ONU converting a service VLAN on the HG to a service VLAN which can be identified by the ONU according to the service VLAN conversion rule, so as to implement identification and network access for the HG.

2. The method according to claim 1, **characterized in that**:
the step of the ONU receiving the HG MAC feature code and the management VLAN sent by the network manager comprises: the ONU receiving the HG MAC feature code and the management VLAN sent by the network manager via an HG configuration data entity,
wherein the HG configuration data entity is configured to configure the management VLAN and the HG MAC feature code, and the HG configuration data entity comprises the following attributes: a Managed entity Identifier (Meid), a management VLAN, and a MAC code table, wherein the Meid represents that the entity has only one instance and the value of Meid is 0; the value of the management VLAN is 0, representing that the ONU does not detect the HG which is connected to the ONU; and the MAC code table is used for storing the MAC feature code.

3. The method according to claim 1, **characterized in that**:
the step of the network manager configuring the HG network access identifier on the ONU as having accessed network comprises: the network manager configuring the HG network access identifier on the ONU as having accessed network via an HG connection data entity,
wherein, the HG connection data entity is configured to configure the network access identifier and report a network access event, and the HG connection data entity comprises the following attributes: an Meid, an MAC address, a connection identifier, a data VLAN (DATA VLAN), and a plurality of service VLANs, wherein the attribute value of the Meid is equal to the Meid of a corresponding Physical path termination point Ethernet User Network Interface (UNI) entity; the MAC address represents an MAC address information of the HG detected on a user port of the ONU; the connection identifier is an network access identifier bit, 0 represents not accessing network, and 1 represents having accessed network; the DATA VLAN represents a data service VLAN configured on the user port of the ONU; and the plurality of service VLANs represent the VLANs on the user port of the ONU, for special services; and
the step of the network manager configuring the HG network access identifier on the ONU via the HG connection data entity comprises: configuring the connection identifier attribute value of the HG connection data entity in the ONU to be 1.

4. The method according to claim 3, **characterized in that**:
the step of the ONU automatically identifying the HG which is connected to ONU and corresponds to the HG MAC feature code and the management VLAN comprises: identifying a message which is reported by the HG, and obtaining port information and an MAC Address; searching the HG connection data entity according to the port information, and updating the corresponding MAC address in the HG connection DATA entity; obtaining an attribute value of the service VLAN according to a value of the DATA VLAN of the HG connection data entity; encapsulating the MAC address and the attribute value of the service VLAN to be an Attribute Value Change (AVC) message, and then reporting the AVC message to the network manager.

5. The method according to claim 4, **characterized in that**:
the step of identifying the message which is reported by the HG comprises: judging whether a reporting port is in an authentication state of not accessing network; reporting whether the VLAN of the message is the management VLAN; and judging whether an MAC address pool of the ONU is empty.

6. The method according to claim 3, **characterized in that**, before the ONU automatically identifying the HG which is connected to the ONU and corresponds to the HG MAC feature code and the management VLAN, the method further comprises a network access operation of the ONU; and the network access operation of the ONU comprises :
after receiving a power-on message from an unknown ONU, the network manager configuring a Transmission Container (TCONT) entity and a Gigabit-capable Passive Optical Network (GPON) Encapsulation Method Port (GEM Port) entity for the ONU; adding a temporary network accessing VLAN on the GEM Port, and adding the user port of the ONU to the temporary network accessing VLAN;
the network manager reporting ONU network access information to the resource system, and configuring a user data port of the ONU to add the network accessing VLAN in an untag (UNTAG) mode via an Extended VLAN tagging operation configuration data entity, and deleting the temporary network accessing VLAN on the data port after receiving a response from the resource system;
the ONU writing the network accessing VLAN into the DATA VLAN attribute of an HG connection data entity database, the network manager sending the HG MAC address pool and the network management VLAN configuration of the ONU via the HG configure data entity, and adding all the data ports of the ONU into the management VLAN in the mode of tag (TAG); and
the ONU writing the attribute value of the HG configure data entity into a Management Entity (ME) database, storing the HG MAC address pool and the network management VLAN of the ONU, so as to realize the network access of the ONU.

7. The method according to claim 3, **characterized in that**, after identifying and accessing network for the HG, the method further comprises an HG deletion operation, and the HG deletion operation comprises:
after receiving an HG deletion operation message, the network manager deleting the VLAN configuration under the HG scene via the Extended VLAN tagging operation configuration data entity;
configuring a corresponding data port of the ONU to add the network accessing VLAN in UNTAG mode; and
the network manager configuring the HG network access identifier on the ONU to be non-accessed via the HG connection data entity.

8. The method according to any one of claims 1 to 7, **characterized in that**, the service comprises an interactive Internet Protocol Television (IPTV) and/ or a Voice over Internet Protocol (VoIP) based on a data network.

9. A system for identifying and accessing network for a Home Gateway (HG), **characterized by** comprising an Optical Network Unit (ONU) and a network manager, wherein:
the ONU is configured to receive an HG Media Access Control (MAC) feature code and a management Virtual Local Area Network (VLAN) sent by the network manager, automatically identify an HG which is connected to the ONU and corresponds to the HG MAC feature code and the management VLAN, and report an MAC address and a service attribute of the HG to the network manager;
the network manager is configured to send an HG network access message to a resource system for identifying, configure an HG network access identifier on the ONU as having accessed network, and send a service VLAN conversion rule to the ONU; and
the ONU is further configured to convert a service VLAN on the HG to a service VLAN which can be identified by the ONU according to the service VLAN conversion rule, so as to implement identification and network access for the HG.

10. The system according to claim 9, **characterized in that** the system further comprises:
an HG configure data entity, configured to configure the management VLAN and the MAC feature code, and the HG configure data entity comprises the following attributes: a Managed entity Identifier (Meid), a management VLAN, and an MAC code table, wherein the Meid represents that the entity has only one instance and the value of Meid is 0; the value of the management VLAN is 0, representing that the ONU does not detect the HG which is connected to the ONU; and the MAC code table is used for storing the MAC feature code; and
the ONU is configured to receive the HG MAC feature code and the management VLAN sent by the network manager via the HG configure data entity.

11. The system according to claim 9, **characterized in that** the system further comprises:
an HG connection data entity, configured to configure the network access identifier and report a network access event, and the HG connection data entity comprises the following attributes: a Meid, an MAC address, a connection identifier, a data VLAN (DATA VLAN), and a plurality of service VLANs, wherein the attribute value of the Meid is equal to the Meid of a corresponding Physical path termination point Ethernet User Network Interface (UNI) entity; the MAC address represents an MAC address information of the HG detected on a user port of the ONU; the connection identifier is an network access identifier bit, 0 represents not accessing network, and 1 represents having accessed network; the DATA VLAN represents a data service VLAN configured on the user port of the ONU; and the plurality of service VLANs represent the VLANs on the user port of the ONU, for special services; and
the network manager is configured to configure the HG network access identifier on the ONU as having accessed network via the HG connection data entity.
